# FASCICULE DE BREVET EUROPEEN

(11) **EP 1 695 885 B1**
(45) Date de publication et mention de la délivrance du brevet: **14.11.2007**
(21) Numéro de dépôt: 06115426.6
(22) Date de dépôt: 02.09.2003
(51) Int. Cl.: B60T 8/36

(54) **Valve de commande pour l'anti-patinage et l'anti-blocage d'au moins une roue d'un véhicule**
Steuerventil für Antriebsschlupf- und Blockierschutzregelung mindestens eines Fahrzeugrades
Control valve for traction control and anti-lock braking of at least one vehicle wheel

(30) Priorité: 02.09.2002 FR 0210824
(43) Date de publication de la demande: 30.08.2006
(62) Demande divisionnaire de: 03769551.7
(73) Titulaire: POCLAIN HYDRAULICS INDUSTRIE, 60411 Verberie (FR)
(72) Inventeur: Rouillard, Jean-Marie, 60610 LA CROIX SAINT OUEN (FR); Lucienne, Philippe, 60300 AUMONT EN HALATTE (FR)
(74) Mandataire: Intes, Didier Gérard André

(56) Documents cités:
- EP-A- 0 479 044
- EP-A- 0 505 254
- EP-A- 0 526 276
- WO-A-92/03321
- WO-A-92/07743
- US-A- 5 727 851

## Description

La présente invention concerne une valve de commande pour l'anti-patinage et l'anti-blocage d'au moins une roue d'un véhicule.

On connaît déjà des systèmes de freinage, appliqués en particulier aux véhicules automobiles utilisés sur route, dans lesquels un maître-cylindre de frein est équipé d'un réservoir. Pour le freinage, un volume de fluide qui dépend de l'effort d'actionnement sur la pédale de frein est transféré du réservoir via le maître-cylindre vers le ou les cylindres de frein. Lorsque la pédale est relâchée, le fluide retourne vers le réservoir. Ce dernier est de taille réduite et ces systèmes sont utilisables pour les applications dans lesquelles le transfert d'un très faible volume de fluide suffit à l'actionnement d'un cylindre de frein. Certains véhicules automobiles sont dotés, en outre, d'un système anti-patinage et d'un système anti-blocage. Le système anti-blocage, commandé par des électrovalves à action rapide, consiste à faire diminuer la pression de fluide dans le cylindre de frein dès qu'une roue à laquelle ce cylindre est associé tend à se bloquer. Le système anti-patinage utilise une source de fluide sous pression auxiliaire qui, lorsqu'une roue tend à patiner, est mise à contribution pour la freiner en alimentant le cylindre de frein associé à cette roue.

Pour des engins de taille plus importante, en particulier des engins agricoles et des engins de travaux publics, les volumes de fluide devant être transférés dans les cylindres de frein pour opérer le freinage sont beaucoup plus élevés. Par conséquent, les circuits de freinage comprennent en général une source de pression qui, par l'intermédiaire d'une valve de débit prioritaire et d'un conjoncteur-disjoncteur, sert à alimenter des accumulateurs de fluide. Le fluide utilisé pour alimenter les cylindres de frein provient de ces accumulateurs, qui sont éloignés de ces cylindres.

WO 92/03321 propose un dispositif anti-blocage et anti-patinage qui utilise, pour chaque roue freinée, une valve de commande à deux positions apte à raccorder le cylindre de frein à une conduite de freinage reliée à une alimentation en fluide de freinage ou à une conduite de liaison reliée à une valve supplémentaire associée à cette roue.

En cas de blocage de cette roue, la valve de commande raccorde le cylindre de frein à la conduite de liaison et la valve supplémentaire permet, lorsqu'elle est au repos, l'évacuation de la pression du cylindre de frein vers une vidange. Lorsque cette pression a suffisamment diminué, la valve supplémentaire doit être commandée pour relier la conduite de liaison à une source auxiliaire de pression et reprendre ainsi le freinage.

En cas de patinage de la roue, la valve de commande raccorde également le cylindre de frein à la conduite de liaison qui est reliée à la valve supplémentaire et cette dernière doit être commandée pour relier la conduite de liaison à la source auxiliaire de pression et freiner ainsi la roue qui patine ou pour, au contraire, relier la conduite de liaison à la vidange et éviter un freinage excessif de cette roue.

Ce dispositif et son fonctionnement sont relativement complexes. De plus, la reprise du freinage de la roue après une situation de blocage de cette roue n'est pas assurée par la conduite de freinage, de sorte que le niveau de freinage ne peut pas être normalement commandé par l'opérateur.

L'invention concerne une valve de commande pour l'anti-patinage et l'anti-blocage d'au moins une roue d'un véhicule qui soit simple dans sa construction et dans sa commande, tout en permettant un dosage de l'anti-patinage et de l'anti-blocage.

EP 0 526 276 et WO 92/07743 divulguent une valve qui présente une première voie de raccordement à un cylindre de frein, une deuxième voie de raccordement à une source de pression de freinage, une troisième voie de raccordement à une conduite de délestage et une quatrième voie de raccordement à une source de pression d'anti-patinage. Cette valve de commande est une valve progressive qui comporte un organe mobile entre une position de freinage normal dans laquelle les première et deuxième voies sont raccordées entre elles et isolées des troisième et quatrième voies, une position d'anti-blocage dans laquelle les première et troisième voies sont raccordées entre elles et isolées des deuxième et quatrième voies et une position d'anti-patinage dans laquelle les première et quatrième voies sont raccordées entre elles et isolées des deuxième et troisième voies. Pour doser l'anti-patinage et l'anti-blocage, cette valve comporte des moyens pour, dans la position d'anti-patinage, faire varier la section de communication entre les première et quatrième voies en fonction de la pression à la première voie et pour, dans la position d'anti-blocage, faire varier la section de communication entre les première et troisième voies en fonction de la pression à la première voie.

De plus, la valve de WO 92/07743 présente un actionneur pour déplacer l'organe mobile.

Ainsi, WO 92/07743 divulgue une valve de commande selon le préambule de la revendication 1.

L'invention vise à proposer des moyens de rappel de l'actionneur favorisant l'équilibrage des efforts exercés par l'actionneur et des efforts de rappel.

Ce but est atteint grâce aux caractéristiques de la partie caractérisant de la revendication 1.

De préférence, la valve joue le rôle d'un réducteur de pression pour l'anti-patinage et d'un limiteur de pression pour l'anti-blocage. Ainsi, de préférence, la valve de commande comporte des moyens pour ouvrir la communication entre les première et troisième voies lorsque la communication entre les première et quatrième voies se ferme à partir de la position d'anti-patinage et pour ouvrir la communication entre les première et deuxième voies lorsque la communication entre les première et troisième voies se ferme à partir de la position d'anti-blocage.

L'invention sera bien comprise et ses avantages apparaîtront mieux à la lecture de la description détaillée qui suit, d'un mode de réalisation représenté à titre d'exemple non limitatif.

La description se réfère aux dessins annexés, sur lesquels :
- les figures 1 à 3 montrent un circuit de freinage intégrant un dispositif pour l'anti-patinage et l'anti-blocage, selon trois variantes ; et
- les figures 4 à 6 montrent une valve de commande selon l'invention, dans trois positions respectives.

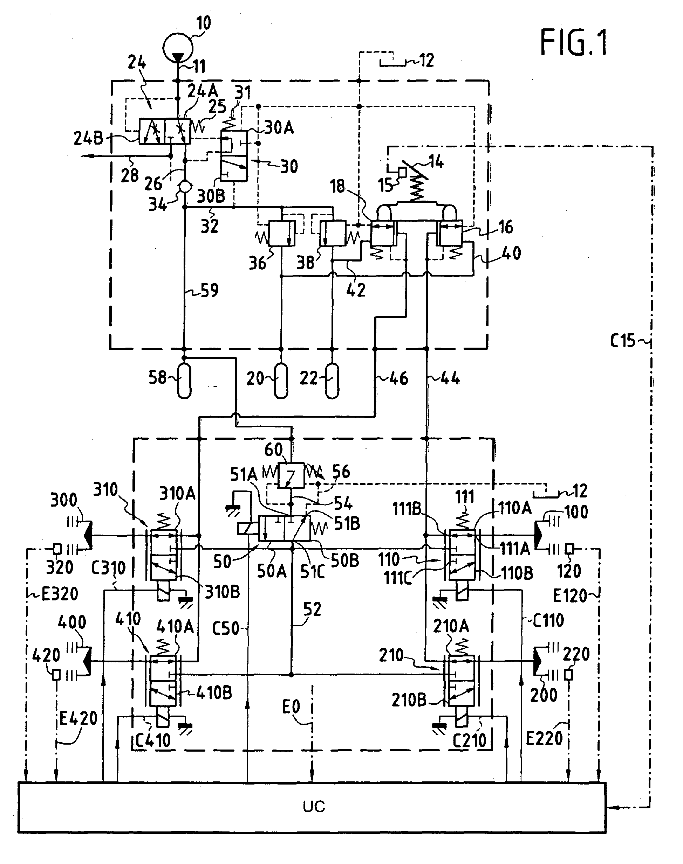

Le circuit de freinage représenté sur les figures 1 à 3 sert au freinage d'un véhicule ayant quatre roues équipées, chacune, d'un cylindre de frein, respectivement 100, 200, 300 et 400.

Le circuit de freinage est un circuit de type ouvert comprenant une pompe 10 de refoulement de fluide sous pression et un réservoir à la pression atmosphérique 12. Dans l'exemple représenté, le circuit est scindé en deux sous-circuits de freinage (par exemple un sous-circuit par essieu) servant respectivement au freinage des roues associées, d'une part, aux cylindres 100 et 200 et à celui des roues associées, d'autre part, aux cylindres 300 et 400. La commande de frein est une pédale 14, qui, lorsqu'elle est actionnée, commande une valve de freinage 16 pour le freinage des roues associées aux cylindres 100 et 200 et une valve de freinage 18 pour le freinage des roues associées aux cylindres 300 et 400. Bien entendu, l'invention s'applique également à un circuit comprenant une seule valve de freinage pour les cylindres de frein ou encore à un circuit comprenant plus de deux sous-circuits. En l'espèce, la valve de freinage 16, 18 est constituée par un réducteur de pression à tarage variable qui génère une pression proportionnelle à l'effort exercé sur la pédale 14.

De manière connue en soi, la pompe 10 peut alimenter en fluide des accumulateurs de fluide de freinage, respectivement 20 et 22, auxquels sont respectivement reliées les valves de freinage 16 et 18.

Par exemple, la pompe 10 est une pompe auxiliaire qui sert à la commande des organes de direction et/ou à celle d'accessoires ou d'outils du véhicule. Une valve de débit prioritaire 24 est placée sur la conduite de refoulement 11 de cette pompe 10. Dans sa position de repos, représentée sur les figures, cette valve relie la conduite de refoulement 11 à une conduite 26 d'alimentation en fluide des accumulateurs.

Dans sa première position 24A, la valve 24 relie la conduite de refoulement 11 seulement à la conduite 26 afin de charger en fluide les accumulateurs. Dans sa deuxième position 24B, la valve 24 continue de relier la conduite de refoulement 11 à la conduite 26 par une voie ayant une restriction, mais elle relie prioritairement cette conduite de refoulement à une conduite auxiliaire 28 par une voie sans restriction.

Cette conduite 28 sert à assurer des fonctions auxiliaires prioritaires du véhicule telles que mentionnées ci-dessus, en particulier la commande des organes de direction.

Le circuit de freinage comporte également une valve 30 dite conjoncteur-disjoncteur.

Dans sa première position 30A représentée sur les figures, le conjoncteur-disjoncteur 30 sollicite la valve 24 dans sa première position 24A en ramenant dans une première chambre de commande de cette valve une pression de fluide prélevée dans la conduite 26, pour ajouter cette pression à l'effort exercé par un ressort de rappel 25 qui sollicite constamment la valve 24 vers sa première position 24A. La position 30A est la position de conjonction.

Dans sa deuxième position 30B, dite de disjonction, le conjoncteur-disjoncteur 30 fait communiquer la chambre de commande précédemment évoquée avec le réservoir à la pression atmosphérique 12. La valve 24 peut donc occuper sa position 24B en étant sollicitée vers cette deuxième position par l'alimentation d'une deuxième chambre de commande, d'effet antagoniste à celui du ressort 25 et de la première chambre de commande, par du fluide prélevé sur la conduite de refoulement 11.

Le conjoncteur-disjoncteur 30 occupe naturellement sa position de conjonction 30A dans laquelle il est rappelé constamment par un ressort 31, ce qui permet à la valve 24 d'occuper naturellement sa première position 24A pour charger les accumulateurs en fluide, en particulier au démarrage. Lorsque la pression dans ces accumulateurs atteint un premier seuil, le conjoncteur-disjoncteur 30 est commandé dans sa deuxième position 30B par alimentation d'une chambre de commande d'effet antagoniste à celui du ressort 31, par du fluide provenant d'une conduite 32 d'alimentation des accumulateurs, qui est reliée à la conduite 26 par un clapet anti-retour 34 autorisant seulement la circulation de fluide de la pompe 10 vers les accumulateurs.

Les accumulateurs 20 et 22 sont chacun reliés à la conduite 32 par l'intermédiaire d'une soupape d'isolement, respectivement 36 et 38, qui constitue un dispositif de sécurité permettant d'isoler un sous-circuit défaillant. Les valves de freinage 16 et 18 sont reliées aux accumulateurs 20 et 22 en aval de ces limiteurs de pression, respectivement par les conduites 40 et 42. Lorsque la pédale de frein 14 est actionnée, elle sollicite les valves 16 et 18 pour alimenter en fluide de freinage des conduites de freinage, respectivement 44 et 46, ces valves raccordant ces conduites de freinage aux conduites respectives 40 et 42.

Lorsque la pression dans les accumulateurs diminue jusqu'à atteindre un deuxième seuil, l'effort du ressort 31 devient prépondérant et ramène le conjoncteur-disjoncteur dans sa position 30A pour permettre la recharge des accumulateurs.

Dans la variante de la figure 1, le dispositif de l'invention comprend un sélecteur de fonction 50 ayant au moins deux positions. Sa position 50A est une position de mode anti-patinage dans laquelle il relie une conduite de branchement 52 à une conduite 54 d'alimentation en fluide. La deuxième position 50B du sélecteur est une position de mode anti-blocage dans laquelle il relie la conduite de branchement 52 à une vidange 56 reliée au réservoir 12. Ce sélecteur comprend en effet une voie d'alimentation 51A qui est reliée à la conduite 54, une voie de vidange 51B qui est reliée au réservoir à la pression atmosphérique 12 et une voie de sortie 51C qui est reliée à la conduite de branchement 52.

L'alimentation en fluide 54 est alimentée par la même source de pression que le circuit de freinage. En effet, la conduite 54 est reliée à la conduite 32 précédemment citée par une conduite de liaison 59, elle-même reliée à un accumulateur de fluide d'anti-patinage 58 qui est alimenté par la pompe 10. L'accumulateur 58 est donc chargé en fluide de la même manière que les accumulateurs 20 et 22 précédemment évoqués en fonction de la position du conjoncteur-disjoncteur 30 et de celle de la valve de débit prioritaire 24.

Avantageusement, la pression de fluide dans la conduite 54 est inférieure à la pression d'alimentation en fluide dans la ou les conduites de freinage 44 et 46. En effet, la pression de fluide en attente dans l'alimentation 54, à la voie d'alimentation 51A du sélecteur 50 sert à freiner légèrement une roue qui tend à patiner. Le couple de freinage, devant être développé n'est pas nécessairement aussi élevé que celui qui sert à immobiliser le véhicule.

Pour qu'une pression de fluide stabilisée soit en attente à la voie d'alimentation 51A, l'accumulateur de fluide d'anti-patinage 58 est raccordé à l'alimentation en fluide 54 par l'intermédiaire d'un réducteur de pression 60. Ce réducteur de pression peut être taré en fonction des caractéristiques du véhicule, en prenant en compte des paramètres tels que la masse de ce véhicule et la puissance de son ou de ses moteurs. Par exemple, la pression du fluide stockée dans les accumulateurs 20 et 22 et utilisée dans les conduites de freinage 44 et 46 pour le freinage peut être comprise entre 120 et 140 bar. C'est également la pression du fluide qui peut être stockée dans l'accumulateur 58. Selon le type de véhicule, le réducteur de pression 60 peut être réglé pour que la pression en attente dans l'alimentation en fluide 54 soit stabilisée à une valeur comprise entre 50 et 100 bar.

A chaque cylindre de frein est associée une valve de commande, respectivement 110, 210, 310 et 410. Pour les cylindres 100, 200, 300 et 400, chacune de ces valves peut occuper une position de freinage normal, respectivement 110A, 210A, 310A et 410A dans laquelle elle relie le cylindre de frein auquel elle est associée à une conduite de freinage, respectivement 44 pour les valves 110 et 210 et 46 pour les valves 310 et 410.

Chaque valve de commande peut également occuper une position dite de mode particulier, respectivement 110B, 210B, 310B et 410B dans laquelle elle relie le cylindre auquel elle est associée à la conduite de branchement 52.

Dans l'exemple de la figure 1, chaque valve de commande comprend, à l'instar de la valve 110, une voie 111A de raccordement au cylindre à laquelle elle est associée, une voie 111B de raccordement à la conduite de freinage (44 pour les valves 110 et 210, ou 46 pour les valves 310 et 410) et une voie 111C de raccordement à la conduite de branchement 52.

Dans la position de freinage normal 110A de la valve 110, les voies 111A et 111B sont reliées, tandis que la voie 111C en est isolée. Au contraire, dans la position de mode particulier 110B, les voies 111A et 111C sont reliées, tandis que la voie 111B est isolée.

Lorsque le sélecteur 50 occupe sa position de mode anti-blocage 50B, la voie de vidange 51B et la voie de sortie 51C de ce sélecteur sont reliées, tandis que la voie d'alimentation 51A est isolée de ces voies. Dans ces circonstances lorsque, à l'occasion d'un freinage (les valves de commande 110, 210, 310 et 410 étant dans leur position de freinage normal), on détecte une situation de tendance au blocage pour l'une des roues, par exemple celle qui est associée au cylindre 100, il suffit de commander la valve 110 associée à ce cylindre pour la placer dans sa position de mode particulier 110B. La voie de raccordement au cylindre 111A de cette valve se trouve alors automatiquement raccordée à la vidange 56 par sa liaison avec la voie 111C elle-même reliée à la conduite de branchement 52. La pression dans le cylindre de frein diminue et le blocage de la roue cesse.

Dans la position de mode anti-patinage 50A du sélecteur 50, la voie d'alimentation 51A et la voie de sortie 51C de ce sélecteur sont reliées, tandis que la voie de vidange 51B en est isolée. Dans ces circonstances, lorsque le véhicule circule sans être freiné et que l'on constate une situation de patinage de l'une des roues, par exemple celle qui est associée au cylindre 100, il suffit de commander la valve 110 associée à ce cylindre, pour la placer dans sa position de mode particulier 110B. Ceci a pour effet de relier le cylindre 100 à la conduite de branchement 52 qui est elle-même reliée à l'alimentation en fluide 54 puisque les voies 51A et 51C sont reliées. La pression qui est en attente dans la conduite 54 peut donc alimenter le cylindre 100 et freiner la roue qui patine.

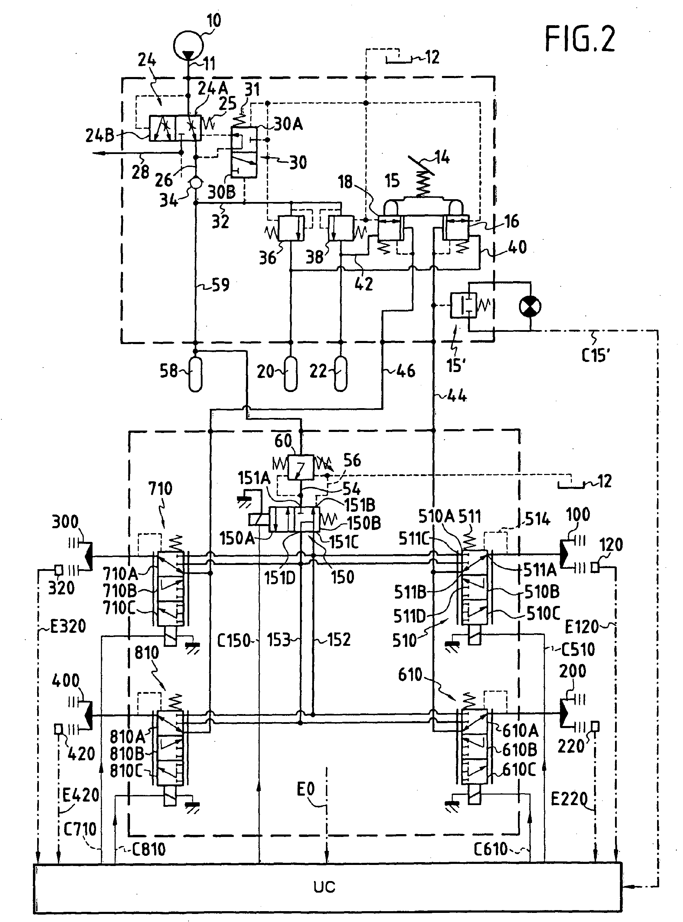

La variante de la figure 2 diffère de celle de la figure 1 par la conformation du sélecteur de fonction 150 et par celle des valves de commande 510, 610, 710 et 810. Sur la figure 2, les éléments inchangés par rapport à ceux de la figure 1 sont désignés par les mêmes références.

Le sélecteur de fonction 150 comprend une voie d'alimentation 151A qui est reliée à l'alimentation en fluide 54, une voie de vidange 151B qui est reliée à la vidange 56, une première voie de sortie 151C qui est reliée à une première conduite de branchement 152 et une deuxième voie de sortie 151D qui est reliée à une deuxième conduite de branchement 153.

Pour chaque cylindre de frein 100, 200, 300 et 400, la valve de commande respectivement 510, 610, 710 et 810 est susceptible d'adopter une position de freinage respectivement 510A, 610A, 710A et 810A, une position de mode particulier qui est une position d'anti-blocage, respectivement 510B, 610B, 710B et 810B, ainsi qu'une autre position de mode particulier qui est une position d'anti-patinage, respectivement 510C, 610C, 710C et 810C.

Les valves de commande 510, 610, 710 et 810 sont identiques. On décrit plus en détail la valve 510 à titre d'exemple.

Elle comprend une voie 511A de raccordement au cylindre, une voie 511B de raccordement à la conduite de freinage, une voie 511C de raccordement à la première conduite de branchement et une voie 511D de raccordement à la deuxième conduite de branchement.

Dans la position de freinage normal 510A de la valve 510, sa voie de raccordement au cylindre 511A et sa voie de raccordement à la conduite de freinage 511B sont reliées, tandis que les voies de raccordement aux première et deuxième conduites de branchement 511C et 511D sont isolées de ces voies.

Dans sa position d'anti-blocage 510B, sa voie de raccordement au cylindre 511A et sa voie de raccordement à la première conduite de branchement 511C sont reliées, tandis que sa voie de raccordement à la conduite de freinage 511B et sa voie de raccordement à la deuxième conduite de branchement 511D sont isolées de ces voies. Elles sont également isolées entre elles.

Enfin, dans la position d'anti-patinage 510C de cette valve, sa voie de raccordement au cylindre 511A et sa voie de raccordement à la deuxième conduite de branchement 511D sont reliées, tandis que sa voie de raccordement à la conduite de freinage 511B et sa voie de raccordement à la première conduite de branchement 511C sont isolées de ces voies. Elles sont également isolées entre elles.

Le sélecteur 150 peut occuper une position de mode anti-patinage 150A et une position de mode anti-blocage 150B. Dans la position de mode anti-patinage, la voie d'alimentation 151A et la deuxième voie de sortie 151D sont reliées entre elles, tandis que la voie de vidange 151B est isolée de ces voies. En l'espèce, dans cette position, la première voie de sortie 151C est reliée à la voie de vidange 151B. Dans la position 150B de mode anti-blocage du sélecteur, la voie de vidange 151B et la première voie de sortie 151C sont reliées, tandis que la voie d'alimentation 151A est isolée de ces voies. En l'espèce, dans cette position de mode anti-blocage, la deuxième voie de sortie 151D est également reliée à la voie de vidange 151B.

Lorsque le sélecteur 150 est dans sa position de mode anti-blocage 150B et lorsque, à l'occasion d'un freinage, on détecte une tendance au blocage de l'une des roues, par exemple la roue associée au cylindre 100, il suffit de commander la valve de commande 510 pour la faire passer de sa position de freinage normal 510A à sa position d'anti-blocage 510B de manière à faire baisser la pression dans le cylindre de frein et faire ainsi cesser la tendance au blocage de cette roue. En effet, dans ce cas, le passage de la valve 510 dans sa position 510B fait communiquer le cylindre 100 avec la vidange 56.

En situation de conduite dans laquelle des risques de patinage peuvent survenir, on commande le sélecteur 150 dans sa position de mode anti-patinage 150A. Si une roue patine, par exemple la roue associée au cylindre 100, il suffit de commander la valve de commande 510 pour la placer dans sa position d'anti-patinage 510C de manière à alimenter le cylindre 100 avec la pression de fluide en attente dans l'alimentation en fluide 54 du fait de la liaison entre la voie de raccordement au cylindre 511A et la voie 511D de raccordement à la deuxième conduite de branchement 153 qui, dans la position 150A du sélecteur 150, est reliée à l'alimentation en fluide 54. La pression augmente ainsi dans le cylindre 100 qui peut freiner la roue qui patinait.

Chacune des valves de commande 510, 610, 710 et 810 est apte à être commandée pour régler la pression de fluide dans le cylindre auquel elle est associée, en fonction de la commande de ladite valve. Chacune de ces valves comporte des moyens formant réducteur de pression à double action. En effet, lors du contrôle du patinage, la valve est apte, par la voie 511A, à alimenter le cylindre en fluide à une pression proportionnelle au signal de commande de cette valve en jouant ainsi le rôle d'un réducteur de pression car elle alimente le cylindre en fluide à une pression inférieure à celle qui est disponible. Ceci permet de freiner la roue qui patinait avec une pression adaptée à la situation.

Lors du contrôle d'une tendance au blocage, la valve de commande est apte à délester le cylindre en pression proportionnellement à son signal de commande en jouant ainsi le rôle d'un limiteur de pression dans le cylindre.

Comme indiqué pour la valve 510, la commande de cette valve prend en compte la pression dans le cylindre par une conduite 514.

Dans l'exemple représenté, les positions anti-blocage 510B et anti-patinage 510C sont adjacentes. Plus précisément, la valve de commande passe par sa position d'anti-blocage entre sa position de freinage normal et sa position d'anti-patinage.

La progressivité de chaque valve de commande fait que les sections de communication entre les voies de cette valve et les conduites qui leur sont raccordées varient progressivement lors du déplacement de cette valve entre ces deux positions.

On a vu que, lorsque le sélecteur 150 est dans sa position de mode anti-patinage 150A, les voies 151A et 151D sont reliées entre elles, de sorte que la pression d'attente règne dans la deuxième conduite de branchement 153, tandis que les voies 151C et 151B sont reliées entre elles, de sorte que la première conduite de branchement 152 est reliée à la vidange 56.

Dans ces conditions, on peut réaliser la régulation de la pression dans le cylindre 100 évoquée ci-dessus lorsque le sélecteur 150 est dans sa position de mode anti-patinage.

En effet, la progressivité de la valve 510 permet, lors de son déplacement, de faire varier la section de communication entre ses voies 511A et 511C pour régler le délestage du cylindre puisque cette voie 511C est reliée à la vidange 56 par la conduite de branchement 152 et de faire varier la section de communication entre les voies 511A et 511D pour régler l'augmentation de pression dans le cylindre puisque cette voie 511D est reliée à l'alimentation 54 par la conduite de branchement 153, ceci jusqu'à ce que la pression dans le cylindre de frein prise en compte par la conduite 514 corresponde à la consigne de commande.

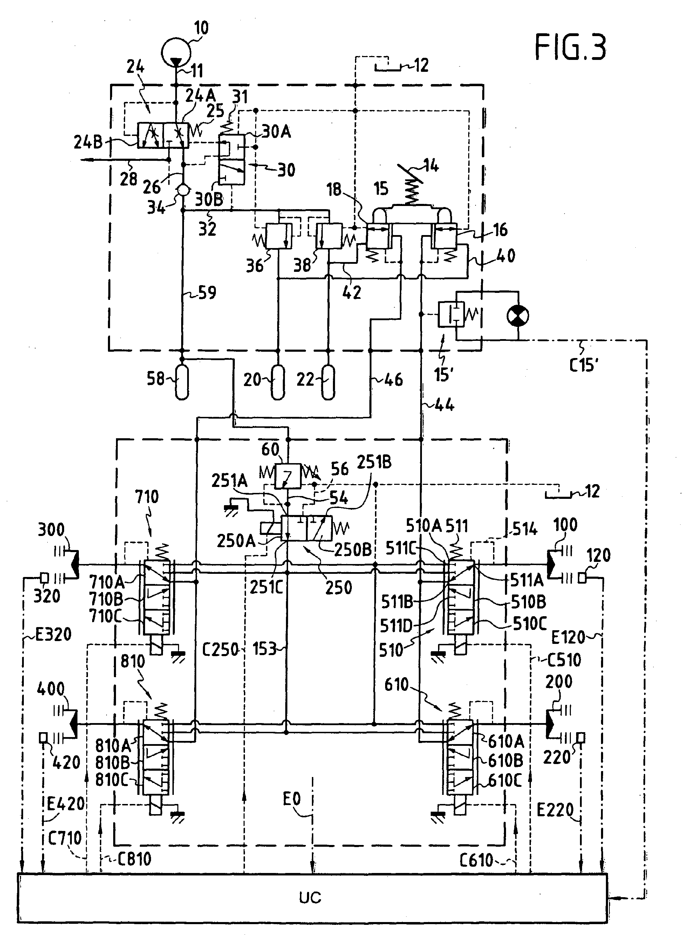

La figure 3 montre une variante du circuit de la figure 2, les éléments inchangés par rapport à la figure 2 étant désignés par des références inchangées.

Le sélecteur 250 à deux positions du circuit de la figure 3 présente une voie d'alimentation 251A qui est reliée à la conduite d'alimentation 54, une voie de vidange 251B qui est reliée au réservoir 12 et une voie de sortie 251C qui est reliée à la conduite de branchement 153.

Les valves de commande 510, 610, 710 et 810 sont les mêmes que celles du circuit de la figure 2. Toutefois, l'une des voies de chacune de ces valves, telle la voie 511C de la valve 510, est reliée en permanence au réservoir à la pression atmosphérique 12.

La figure 3 montre le sélecteur de fonction dans sa position de mode anti-patinage 250A, dans laquelle ses voies 251A et 251C communiquent de manière à raccorder la conduite de branchement 153 à la pression en attente dans la conduite 54.

Ainsi, lorsqu'une situation de patinage d'une roue est détectée, la valve de commande associée au cylindre de frein de cette roue, par exemple la valve 510, est commandée pour adopter sa position d'anti-patinage 510C de manière à alimenter le cylindre de frein par la pression à sa voie 511D qui communique avec la conduite 153.

Dans sa position de mode anti-bloc age 250B, le sélecteur de fonction 250 relie la conduite 153 au réservoir à la pression atmosphérique par ses voies 251B et 251C qui communiquent, de sorte que la pression d'anti-patinage n'est plus en attente à la voie 511D, la conduite 153 ne communiquant plus avec la conduite 54.

Dans cette situation, l'anti-blocage de la roue dont le cylindre de frein est associé à la valve 510 peut être réalisé en amenant cette valve dans sa position 510B dans laquelle ses voies 511A et 511C communiquent, la voie 511C étant reliée en permanence au réservoir 12.

Dans la mesure où cette liaison de la voie 511C avec le réservoir 12 est permanente, lorsque le sélecteur de fonction est dans sa position de mode anti-patinage, la valve 510 peut osciller entre ses positions 510B et 510C pour réaliser un anti-patinage sans risque de blocage comme décrit précédemment en relation avec la figure 2.

Dans les variantes des figures 1 et 2, pour chaque cylindre de frein, la position de freinage normal de la valve de commande est une position de repos de cette valve dans laquelle celle-ci est rappelée en permanence, tandis qu'elle doit être commandée pour passer de cette position à sa ou ses positions de mode particulier. Ainsi, par exemple, la valve 110 de la figure 1 et la valve 510 de la figure 2 sont constamment rappelées vers leurs positions de freinage normal par un ressort de rappel, respectivement 111 et 511.

Comme le sélecteur 50, le sélecteur 150 est naturellement rappelé au repos vers sa position de mode anti-blocage 150B, tandis qu'il doit être commandé pour passer de cette position à sa position de mode anti-patinage 150A.

Sur les figures 1 et 2, les sélecteurs de fonction, de même que les valves de commande, sont des électrovalves qui sont commandées par une unité de commande électronique UC. Cette unité reçoit en entrée tes différents paramètres de fonctionnement du véhicule et commande en conséquence le sélecteur de fonction et les valves de commande.

Le dispositif conforme à l'invention comprend des moyens pour détecter la vitesse à chacune des roues du véhicule qui sont associées à un cylindre de frein, des moyens pour déterminer une vitesse cible pour chacune de ces roues et des moyens pour comparer la vitesse détectée à la vitesse cible et pour en déduire l'existence d'une situation de patinage ou de tendance au blocage d'une roue. En effet, un détecteur de vitesse, respectivement 120, 220, 320 et 420, de type connu en soi, peut être associé à chaque roue pour détecter sa vitesse de rotation. Sans que ceci soit limitatif, il peut s'agir d'un capteur inductif, capacitif ou magnéto-résistif ou bien, lorsque chaque roue est entraînée par un moteur hydraulique, d'un capteur de débit de fluide utilisé dans ce moteur. Ces détecteurs sont reliés à l'unité de commande UC par des lignes d'entrée, respectivement E120, E220, E320 et E420.

Cette unité de commande est apte à déterminer une vitesse cible pour chacune des roues. Pour ce qui est de la détermination de la vitesse cible, on pourra se reporter au document EP-A-0 505 254. Par exemple, cette vitesse cible peut être déterminée comme une vitesse moyenne calculée sur la base des vitesses de rotation des différentes roues, en excluant les vitesses de rotation qui sortent d'un schéma de vraisemblance (du fait du blocage d'une roue ou du patinage d'une roue). Le calcul de la vitesse cible pourra en outre subir des corrections prenant en compte, par exemple, l'angle de braquage des roues directrices ou d'autres paramètres justifiant que les roues aient des vitesses angulaires différentes tels qu'une différence de diamètre des roues. La vitesse cible peut être calculée à partir de la vitesse du véhicule mesurée par un radar.

La vitesse cible peut également être calculée en fonction de la vitesse désirée par l'opérateur selon le degré d'actionnement de l'accélérateur du véhicule. L'unité de commande UC comprend des moyens de calcul qui lui permettent de comparer la vitesse détectée pour chaque roue à cette vitesse cible et elle en déduit l'existence d'une situation de patinage ou de tendance au blocage d'une roue en constatant que la vitesse détectée pour une roue est très éloignée (trop élevée ou, au contraire, trop faible voire nulle) de la vitesse cible calculée.

La tendance au blocage peut être détectée par la variation de l'écart des vitesses avec la vitesse cible.

Si le sélecteur de fonction 50 ou 150 est dans sa position de mode anti-blocage 50B ou 150B et qu'une situation de tendance au blocage d'une roue est détectée, l'unité de commande UC peut, par une ligne de commande, respectivement C110, C210, C310 et C410 pour les valves de la figure 1 et C510, C610, C710 et C810 pour celles de la figure 2, commander la valve de commande associée au cylindre de frein de la roue considérée, de manière à relier ce cylindre à la vidange et à faire cesser la situation de tendance au blocage.

De même, si le sélecteur 50 ou 150 est dans sa position de mode anti-patinage 50A ou 150A et qu'une situation de patinage d'une roue est détectée, alors l'unité de commande UC peut commander la valve de commande associée au cylindre de frein de la roue considérée pour la faire passer dans sa position de mode anti-patinage (position unique de mode particulier 110B, 210B, 310B ou 410B pour la figure 1, ou bien position de mode anti-patinage 510C, 610C, 710C ou 810C pour la figure 2).

Dans les deux cas, cette commande cesse pour ramener la valve dans sa position de freinage normal lorsque la vitesse détectée pour la roue qui avait tendance à se bloquer ou qui patinait redevient conforme à la vitesse cible.

Le passage du sélecteur de fonction 50 ou 150 entre sa position de mode anti-blocage 50B ou 150B et sa position de mode anti-patinage 50A ou 150A peut être commandé manuellement.

On peut également prévoir que l'unité de commande UC soit apte à commander le passage du sélecteur de fonction entre sa position de mode anti-blocage et sa position de mode anti-patinage en fonction des vitesses de roues et de leur vitesse cible.

Par exemple, par une ligne d'entrée EO, l'unité de commande UC peut recevoir un ordre de l'opérateur pour lui commander de faire passer le sélecteur de fonction 50 ou 150 entre l'une et l'autre de ses positions. Pour cela, l'unité UC est reliée au sélecteur 50 ou 150 par une ligne de commande C50 ou C150.

Avantageusement, l'unité de commande UC est apte à commander le passage du sélecteur de fonction 50 ou 150 entre sa position de mode anti-blocage et sa position de mode anti-patinage en fonction des vitesses détectées des roues et de leurs vitesses cibles tant que ces vitesses cibles restent inférieures à une valeur seuil déterminée, tandis que le passage du sélecteur de fonction de sa position de mode anti-blocage à sa position de mode anti-patinage ne peut être commandé que manuellement lorsque les vitesses cibles dépassent cette valeur seuil. Par exemple, la valeur seuil est de l'ordre de 15 à 20 km/h.

En dessous de cette valeur de vitesse, le véhicule, qui peut être un engin de chantier ou un engin agricole, circule souvent dans des conditions difficiles, par exemple sur un terrain gras, dans lesquelles les risques de patinage sont élevés. Il est donc intéressant que l'unité de commande automatiquement le sélecteur de fonction dans sa position de mode anti-patinage pour de telles vitesses, pour lesquelles les situations de patinage sont relativement fréquentes. Pour de telles vitesses, le mode « par défaut » est donc le mode anti-patinage.

En revanche, pour des vitesses plus élevées, la commande délivrée par la ligne C50 ou C150 par l'unité de commande peut cesser, ce qui a pour effet de faire revenir le sélecteur 50 ou 150 dans sa position de mode anti-blocage. En effet, à de telles vitesses élevées, l'opérateur peut être amené à opérer un freinage brusque pour éviter un obstacle et c'est dans de telles circonstances que le mode anti-blocage est utile. Ainsi, pour de telles vitesses, le mode « par défaut » est le mode anti-blocage.

On peut également prévoir que, même lorsque, par exemple à l'occasion d'un fonctionnement à faible vitesse, le sélecteur est placé dans sa position de mode anti-patinage par l'unité de commande, la commande du frein par l'opérateur, en particulier par l'appui sur la pédale 14, fasse passer automatiquement le sélecteur de fonction dans sa position de mode anti-blocage afin que la fonction anti-blocage puisse être activée au cours du freinage si cela s'avère nécessaire par une simple commande de la valve de commande associée au cylindre de frein associé à la roue ayant une tendance au blocage.

Pour cette raison, un détecteur de freinage 15 (figure 1) ou 15' (figure 2) peut être raccordé à l'unité de commande UC par une ligne de commande C15 ou C15'.

Sur la figure 1, le détecteur de freinage est associé à la pédale 14. Sur la figure 2, il s'agit d'un mano-contact à seuil générant un signal par contact lorsque la pression dans la conduite de freinage atteint un seuil. Un capteur de pression lié à la conduite de freinage peut jouer le rôle de détecteur de freinage.

Le dispositif de l'invention peut être utilisé sur des véhicules à transmission mécanique, hydromécanique ou hydrostatique équipés d'un système de freinage assisté par une source de pression auxiliaire.

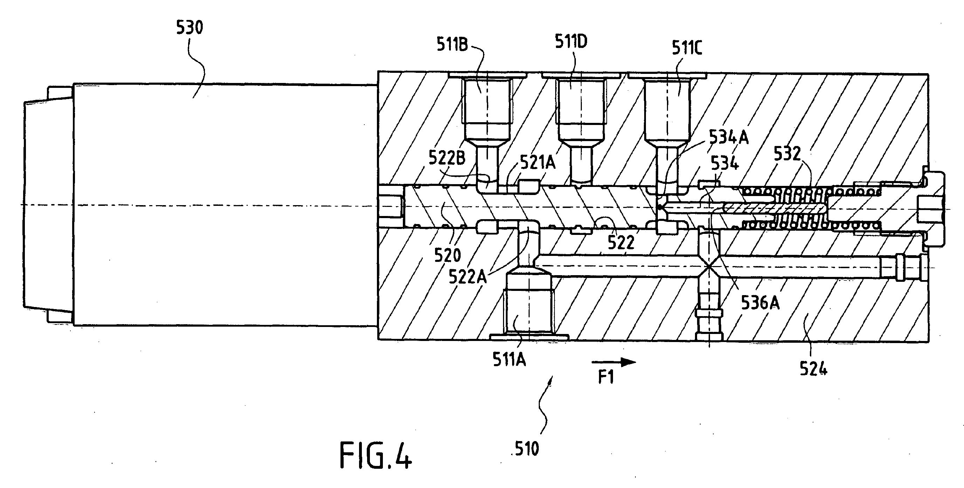

On décrit maintenant les figures 4 à 6 qui représentent un exemple de réalisation pour la valve de commande 510.

Les voies 511A, 511B, 511C et 511D de cette valve servent respectivement au raccordement à un cylindre de frein, à une source de pression de freinage (comme sur la figure 3, par la conduite 44), à une conduite de délestage (comme sur la figure 3 où cette voie est raccordée au réservoir 12) et à une source de pression d'anti-patinage (par exemple par l'intermédiaire de la conduite 153 de la figure 3).

La valve 510 est progressive et comporte un organe mobile 520 formé par un tiroir mobile en translation dans un alésage 522 du corps 524 de la valve.

Le tiroir est mobile entre trois positions qui correspondent respectivement aux positions 510A, 510B et 510C précédemment décrites en référence aux figures 2 et 3.

La valve 510 comporte un actionneur 530, qui peut être électromécanique comme sur les figures 2 et 3, ou de tout type convenable. Il s'agit par exemple d'un actionneur hydraulique ou bien d'un moteur électrique rotatif.

Cet actionneur sert à déplacer le tiroir 520 dans son premier sens de déplacement F1, à l'encontre d'un effort de rappel exercé notamment par un ressort 532. C'est un actionneur proportionnel, c'est-à-dire que l'effort qu'il exerce sur le tiroir 520 pour le déplacer dans le sens F1 est proportionnel à sa commande.

L'actionneur peut être commandé par une unité de commande UC telle que décrite précédemment de manière, notamment, à autoriser une activation ou une désactivation automatique des modes anti-patinage ou anti-blocage par une commande du déplacement du tiroir dans l'une ou l'autre de ses positions en fonction d'une consigne extérieure gérée par l'unité de commande UC.

La figure 4 montre la valve 510 dans sa position de freinage normal 510A dans laquelle la pression de freinage, générée par l'action du conducteur sur la pédale de frein et amenée à la deuxième voie 511B par la conduite de freinage, est transmise à la première voie 511A et donc au cylindre de frein du fait de la communication entre les voies 511A et 511B réalisée par la gorge 521A du tiroir 520, cette gorge étant en regard de l'orifice 522A de l'alésage 522 par lequel la voie 511A communique avec cet alésage et de l'orifice 522B par lequel la voie 511B communique avec l'alésage 522. Les orifices 522A et 522B sont ci-après dénommés "premier orifice de liaison au cylindre de frein" et "orifice de freinage". Le freinage s'opère alors normalement.

La conformation de la valve est telle que lorsque le tiroir est déplacé dans le sens F1 à partir de sa position d'anti-patinage, la section de communication entre les première et quatrième voie augmente et lorsqu'il est déplacé dans le même sens à partir de sa position d'anti-blocage, la section de communication entre les première et troisième voies diminue.

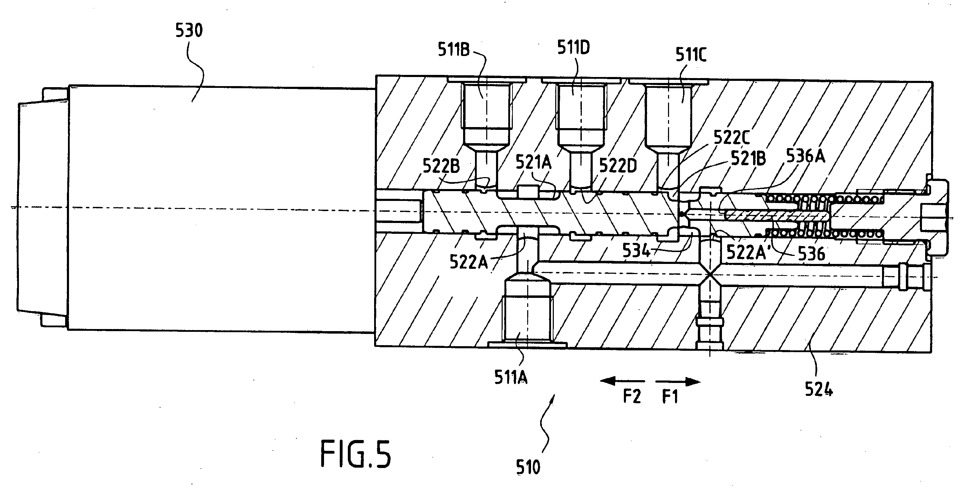

La figure 5 montre cette valve en situation de régulation de l'anti-blocage, dans laquelle cette valve se comporte comme un limiteur de pression vis-à-vis de la pression dans ce cylindre de frein auquel sa première voie est raccordée.

Sur la figure 5, la gorge 521B du tiroir 520 est en regard de l'orifice 522C (ci-après "orifice de délestage") par lequel la voie 511C communique avec l'alésage. En revanche, l'extrémité aval (dans le sens F1) de la gorge 521B est au bord de l'orifice 522A' de l'alésage qui est un deuxième orifice de liaison au cylindre de frein. La gorge 521A est quant à elle en regard de l'orifice 522A et son extrémité amont dans le sens F1 est au bord de l'orifice 522B.

La valve est donc dans une position intermédiaire pour l'anti-blocage dans laquelle, lorsque le tiroir 520 est déplacé dans le sens F1, la communication entre les voies 511A et 511C s'ouvre, permettant ainsi le délestage du cylindre de frein et dans laquelle, lorsque le tiroir est déplacé dans le sens contraire F2, c'est la communication entre les voies 511A et 511B qui s'ouvre, permettant ainsi le freinage.

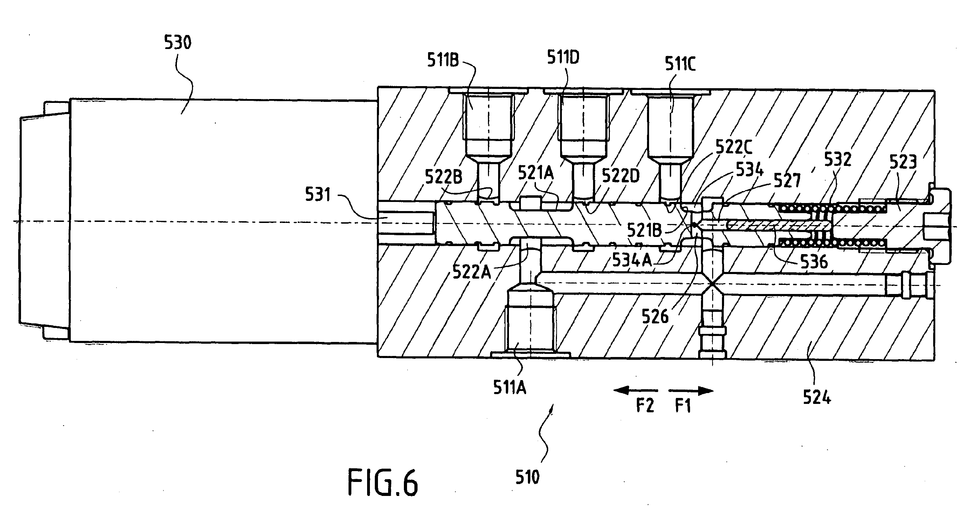

La figure 6 montre cette valve en situation de régulation de l'anti-patinage, dans laquelle elle se comporte comme un réducteur de pression, vis-à-vis de la pression dans ce cylindre de frein.

Sur la figure 6, la gorge 521A est en regard de l'orifice 522A et son extrémité aval dans le sens F1 de l'orifice 522B, tandis que la gorge 521B est en regard de l'orifice 522A' et que son extrémité amont dans le sens F1 est au bord de l'orifice 522C.

La valve est donc dans une position intermédiaire pour l'anti-patinage dans laquelle, lorsque le tiroir 520 est déplacé dans le sens F1, la communication entre les voies 511A et 511D s'ouvre, permettant ainsi l'augmentation de la pression dans le cylindre de frein et dans laquelle, lorsque le tiroir est déplacé dans le sens contraire F2, c'est la communication entre les voies 511A et 511C qui s'ouvre, permettant ainsi le délestage de ce cylindre.

La valve 510 comporte une chambre de commande de rappel 534 qui est reliée à la voie 511A dans la position d'anti-patinage. Ainsi, la pression dans la chambre 534 dépend de la pression à la voie 511A (pression du cylindre de frein). Cette chambre ayant une paroi mobile 534A délimitée par une surface du tiroir tournée vers le sens F1 (c'est la paroi amont, considérée dans le sens F1, d'un perçage transversal 526 du tiroir 520), une augmentation de la pression dans cette chambre provoque un rappel du tiroir 520 en sens contraire de son premier sens de déplacement.

En conséquence, si la pression augmente dans la chambre 534 alors que le tiroir est dans sa position d'anti-patinage, la section de communication entre les voies 511A et 511D diminue, de sorte que la perte de charge entre la voie 511D et la voie 511A augmente pour éviter un freinage excessif de la roue qui patine.

Les orifices 522B, 522A, 522D, 522C et 522A' de l'alésage 522 sont situés les uns après les autres dans le sens F1.

L'alésage transversal 526 du tiroir 520 communique avec la gorge 521B pour permettre l'alimentation de la chambre 534 par le fluide provenant de la voie 511A et la vidange de cette chambre par la voie 511C.

Du côté opposé à cette paroi mobile, la chambre 534 est délimitée par la paroi fixe constituée par l'extrémité 536A d'une aiguille 536 disposée dans un passage longitudinal 527 du tiroir et en appui contre un bouchon 523 qui ferme l'alésage 522. Le ressort 532 est également en appui contre ce bouchon.

Les efforts de rappel dans le sens F2 exercés sur le tiroir par le ressort 532 et par la pression de fluide, agissant sur l'extrémité 536A de l'aiguille 536 constituant une paroi fixe de la chambre 534 située en regard de sa paroi mobile 534A, s'opposent donc aux efforts qu'exerce l'actionneur 530 (par sa tête d'actionnement 531) sur le tiroir pour le déplacer dans le sens F1.

La section de l'aiguille et la puissance de l'actionneur sont choisies pour que ces efforts s'équilibrent à l'issue d'un processus de contrôle du patinage d'une roue dont le cylindre de frein est relié à la voie 511A ou d'un processus de contrôle de blocage de cette roue.

La pression à la voie 511A et donc dans le cylindre de frein est ainsi régulée par le fait que les efforts antagonistes précités ont des intensités de même ordre.

## Revendications

1. Valve de commande pour l'anti-patinage et l'anti-blocage d'au moins une roue d'un véhicule, la valve de commande présentant une première voie (511A) de raccordement à un cylindre de frein, une deuxième voie (511B) de raccordement à une source de pression de freinage, une troisième voie (511C) de raccordement à une conduite de délestage et une quatrième voie (511D) de raccordement à une source de pression d'anti-patinage, ladite valve de commande étant une valve progressive qui comporte un organe (520) mobile entre une position de freinage normal (510A) dans laquelle les première et deuxième voies (511A, 511B) sont raccordées entre elles et isolées des troisième et quatrième voies (511C, 511D), une position d'anti-blocage dans laquelle les première et troisième voies (511A, 511C) sont raccordées entre elles et isolées des deuxième et quatrième voies (511B, 511D) et une position d'anti-patinage dans laquelle les première et quatrième voies (511A, 511D) sont raccordées entre elles et isolées des deuxième et troisième voies (511B, 511C), et ladite valve de commande comportant des moyens (521A, 521B, 534, 536) pour, dans la position d'anti-patinage, faire varier la section de communication entre les première et quatrième voies (511A, 511D) en fonction de la pression à la première voie (511A) et pour, dans la position d'anti-blocage, faire varier la section de communication entre les première et troisième voies (511A, 511C) en fonction de la pression à la première voie (511A), ainsi qu'un actionneur (530) apte à déplacer l'organe mobile (520) dans un premier sens de déplacement (F1) à l'encontre d'un effort de rappel, valve de commande dans laquelle, lorsque l'organe mobile (520) est déplacé dans ledit premier sens (F1) à partir de sa position d'anti-patinage, la section de communication entre les première et quatrième voie (511A, 511D) augmente et lorsque ledit organe mobile (520) est déplacé dans ledit premier sens (F1) à partir de sa position d'anti-blocage, la section de communication entre les première et troisième voies (511A, 511C) diminue,
**caractérisée en ce qu'**elle comporte une chambre de commande de rappel (534) apte, dans lesdites positions d'anti-patinage et d'anti-blocage, à être reliée à la première voie (511A) de la valve de telle sorte que la pression dans ladite chambre dépend de la pression à ladite première voie, la chambre de commande de rappel ayant une paroi mobile (534A) délimitée par une surface de l'organe mobile et tournée dans le premier sens (F1), ainsi qu'une paroi fixe (536A) située en regard de cette paroi mobile, de telle sorte qu'une augmentation de pression dans cette chambre provoque rappel de l'organe mobile en sens contraire de son premier sens de déplacement.

2. Valve selon la revendication 1, **caractérisée en ce que** la paroi fixe de la chambre de commande de rappel (534) est constituée par l'extrémité (536A) d'une aiguille (536) disposée dans un passage longitudinal (527) de l'organe mobile (520).

3. Valve selon la revendication 1 ou 2, **caractérisée en ce qu'**elle comporte des moyens (521A, 521B) pour ouvrir la communication entre les première et troisième voies (511A, 511C) lorsque la communication entre les première et quatrième voies (511A, 511D) se ferme à partir de la position d'anti-patinage et pour ouvrir la communication entre les première et deuxième voies (511A, 511B) lorsque la communication entre les première et troisième voies (511A, 511C) se ferme à partir de la position d'anti-blocage.

4. Valve selon l'une quelconque des revendications 1 à 3, **caractérisée en ce qu'**il existe une situation intermédiaire pour l'anti-patinage dans laquelle, lorsque l'organe mobile (520) est déplacé dans le premier sens (F1), la communication entre la première et la quatrième voie (511A, 511D) s'ouvre tandis que, lorsque l'organe mobile est déplacé en sens contraire (F2), la communication entre la première et la troisième voie (511A, 511C) s'ouvre et **en ce qu'**il existe une situation intermédiaire pour l'anti-blocage dans laquelle, lorsque l'organe mobile (520) est déplacé dans le premier sens (F1), la communication entre la première et la troisième voie (511A, 511C) s'ouvre tandis que, lorsque l'organe mobile est déplacé en sens contraire (F2), la communication entre la première et la deuxième voie (511A, 511B) s'ouvre.

5. Valve selon l'une quelconque des revendications 1 à 4, **caractérisée en ce que** l'organe mobile (520) est mobile en translation dans un alésage (522) qui présente, situés les uns après les autres dans le premier sens de déplacement (F1), un orifice de freinage (522B) relié à la deuxième voie (511B), un premier orifice de liaison au cylindre de frein (522A) relié à la première voie (511A), un orifice d'anti-patinage (522D) relié à la quatrième voie (511D), un orifice de délestage (522C) relié à la troisième voie (511C) et un deuxième orifice de liaison au cylindre de frein (522A') relié à la première voie (511A), et **en ce que** l'organe mobile (520) présente une première gorge (521A) apte à relier le premier orifice de liaison au cylindre de frein (522A) à l'orifice de freinage (522B) ou à l'orifice d'anti-patinage (522D) selon la position de l'organe mobile (520) et une deuxième gorge (521B) apte à relier l'orifice de délestage (522C) au deuxième orifice de liaison au cylindre de frein (522A') ou à isoler ces deux orifices l'un de l'autre selon la position de l'organe mobile.

6. Valve selon la revendication 5, **caractérisée en ce que** la deuxième gorge (521B) est apte à relier la chambre de commande de rappel (534) au deuxième orifice de liaison au cylindre de frein (522A') dans les positions d'anti-patinage et d'anti-blocage.

7. Valve selon la revendication 6, **caractérisée en ce que** l'organe mobile (520) présente un perçage transversal (526), qui communique avec ladite deuxième gorge (521B) et qui délimite ladite paroi mobile (534A) de la chambre de commande de rappel.

8. Valve selon la revendication 7, **caractérisée en ce que**, du côté opposé à ladite paroi mobile (534A), la chambre de commande de rappel (534) est délimitée par l'extrémité (536A) d'une aiguille (536) disposée dans un perçage longitudinal (527) de l'organe mobile (520) relié au perçage transversal (526).

## Claims

1. An antislip and an antilock control valve for at least one wheel of a vehicle, the control valve having a first channel (511A) connected to a brake cylinder, a second channel (511B) connected to a braking pressure source, a third channel (511C) connected to a pressure relief pipe, and a fourth channel (511D) connected to an antislip pressure source, said control valve being a progressive valve that includes a member (520) mobile between a normal braking position (510A) in which the first and second channels (511A, 511B) are connected together and isolated from the third and fourth channels (511C, 511D), an antilock mode position in which the first and third channels (511A, 511C) are connected together and isolated from the second and fourth channels (511B, 511D), and an antislip mode position in which the first and fourth channels (511A, 511D) are connected together and isolated from the second and third channels (511B, 511C), and said control valve including means (521A, 521B, 534, 536) for varying the communication area between the first and fourth channels (511A, 511D) in the antislip mode position as a function of the pressure in the first channel (511A) and for varying the communication area between the first and third channels (511A, 511C) in the antilock mode position as a function of the pressure in the first channel (511A) as well as an actuator (530) adapted to move the mobile member (520) in a first displacement direction (F1) against a return force, control valve in which, when the mobile member (520) is moved in said first direction (F1) from its antislip mode position, the communication area between the first and fourth channels (511A, 511D) increases, and when said mobile member (520) is moved in said first direction (F1) from its antilock mode position, the communication area between the first and third channels (511A, 511C) decreases,
the valve being **characterised in that** it includes a return control chamber (534) adapted to be connected in said antislip mode and antilock mode positions to the first channel (511A) of the valve so that the pressure in said chamber depends on the pressure in said first channel, the return control chamber having a mobile wall (534A) delimited by a surface of the mobile member and turned in the first direction (F1) as well as a fixed wall (536A) facing the mobile wall, so that an increase in pressure **in that** chamber causes the mobile member to be moved back in the direction opposite its first displacement direction.

2. Valve according to claim 1, **characterized in that** the fixed wall of the return control chamber (534) consists of the end (536A) of a needle (536) disposed in a longitudinal passage (527) of the mobile member (520).

3. A valve according to claim 1 or claim 2, **characterized in that** it includes means (521A, 521B) for establishing communication between the first and third channels (511A, 511C) when communication between the first and fourth channels (511A, 511D) is shut off from the antislip mode position and for establishing communication between the first and second channels (511A, 511B) when communication between the first and third channels (511A, 511C) is shut off from the antilock mode position.

4. A valve according to any one of claims 1 to 3, **characterized in that** there exists an intermediate antislip situation in which, when the mobile member (520) is moved in the first direction (F1), communication is established between the first and fourth channels (511A, 511D), whereas, when the mobile member is moved in the opposite direction (F2), communication is established between the first and third channels (511A, 511C), and **in that** there exists an intermediate antilock situation in which, when the mobile member (520) is moved in the first direction (F1), communication is established between the first and third channels (511A, 511C), whereas, when the mobile member is moved in the opposite direction (F2), communication is established between the first and second channels (511A, 511B).

5. A valve according to any one of claims 1 to 4, **characterized in that** the mobile member (520) is mobile in translation in a bore (522) comprising in succession in the first displacement direction (F1), a braking orifice (522B) connected to the second channel (511B), a first orifice connected to the brake cylinder (522A) connected to the first channel (511A), an antislip orifice (522D) connected to the fourth channel (511D), a pressure relief orifice (522C) connected to the third channel (511C), and a second orifice connected to the brake cylinder (522A') connected to the first channel (511A), and **in that** the mobile member (520) has a first groove (521A) adapted to connect the first orifice connected to the brake cylinder (522A) either to the brake orifice (522B) or to the antislip orifice (522D) according to the position of the mobile member (520), and a second groove (521B) adapted either to connect the pressure relief orifice (522C) to the second orifice connected to the brake cylinder (522A') or to isolate those two orifices from each other, according to the position of the mobile member.

6. A valve according to claim 5, **characterized in that** the second groove (521B) is adapted to connect the return control chamber (534) to the second orifice (522A') connected to the brake cylinder in the antislip mode and antilock mode positions.

7. A valve according to claim 6, **characterized in that** the mobile member (520) has a transverse bore (526) that communicates with said second groove (521B) and delimits said mobile wall (534A) of the return control chamber.

8. Valve according to claim 7, **characterized in that** the return control chamber (534) is delimited on the side opposite said mobile wall (534A) by the end (536A) of a needle (536) disposed in a longitudinal bore (527) of the mobile member (520) connected to the transverse bore (526).

## Patentansprüche

1. Steuerventil zur Schlupf- und Blockierverhinderung wenigstens eines Rades eines Fahrzeugs, wobei das Steuerventil einen ersten Kanal (511A) zum Verbinden mit einem Bremszylinder, einen zweiten Kanal (511B) zum Verbinden mit einer Bremsdruckquelle, einen dritten Kanal (511C) zum Verbinden mit einer Entlastungsleitung sowie einen vierten Kanal (511D) zum Verbinden mit einer Anti-Schlupf-Druckquelle aufweist, wobei das Steuerventil ein Progressivventil ist, das ein Organ (520) umfaßt, das zwischen einer normalen Bremsposition (510A), in welcher der erste und der zweite Kanal (511A, 511B) untereinander verbunden und von dem dritten und dem vierten Kanal (511C, 511D) isoliert sind, einer Anti-Blockier-Position, in welcher der erste und der dritte Kanal (511A, 511 C) untereinander verbunden und von dem zweiten und dem vierten Kanal (511B, 511D) isoliert sind, sowie einer Anti-Schlupf-Position, in welcher der erste und der vierte Kanal (511A, 511D) untereinander verbunden und von dem zweiten und dem dritten Kanal (511B, 511 C) isoliert sind, beweglich ist, und wobei das Steuerventil Mittel (521 A, 521 B, 534, 536) umfaßt, um in der Anti-Schlupf-Position den Verbindungsquerschnitt zwischen dem ersten und dem vierten Kanal (511 A, 511 D) in Abhängigkeit des Druckes an dem ersten Kanal (511 A) zu variieren und um in der Anti-Blockier-Position den Verbindungsquerschnitt zwischen dem ersten und dem dritten Kanal (511A, 511 C) in Abhängigkeit des Druckes an dem ersten Kanal (511A) zu variieren, sowie eine Betätigungsvorrichtung (530) aufweist, die geeignet ist, das bewegliche Organ (520) in eine erste Bewegungsrichtung (F1) entgegen einer Rückstellkraft zu bewegen, Steuerventil, bei dem dann, wenn das bewegliche Organ (520) ausgehend von seiner Anti-Schlupf-Position in die genannte erste Richtung (F1) bewegt wird, der Verbindungsquerschnitt zwischen dem ersten und dem vierten Kanal (511A, 511 D) zunimmt und dann, wenn das bewegliche Organ (520) ausgehend von seiner Anti-Blockier-Position in die erste Richtung (F1) bewegt wird, der Verbindungsquerschnitt zwischen dem ersten Kanal und dem dritten Kanal (511 A, 511 C) abnimmt,
**dadurch gekennzeichnet, daß** es eine Rückstellsteuerkammer (534) aufweist, die in der Anti-Schlupf- und der Anti-Blockier-Position geeignet ist, mit dem ersten Kanal (511A) des Ventils derart verbunden zu werden, daß der Druck in der genannten Kammer vom Druck am ersten Kanal abhängt, wobei die Rückstellsteuerkammer eine bewegliche Wand (534A), die durch eine Fläche des beweglichen Organs begrenzt ist und in die erste Richtung (F1) weist, sowie eine feste Wand (536A) aufweist, die dieser beweglichen Wand gegenüberliegt, so daß eine Druckerhöhung in dieser Kammer das Rückstellen des beweglichen Organs in zu seiner ersten Bewegungsrichtung entgegengesetzten Richtung bewirkt.

2. Ventil nach Anspruch 1, **dadurch gekennzeichnet, daß** die feste Wand der Rückstellsteuerkammer (534) durch das Ende (536A) einer Nadel (536) gebildet ist, die in einem Längsdurchgang (527) des beweglichen Organs (520) angeordnet ist.

3. Ventil nach Anspruch 1 oder 2, **dadurch gekennzeichnet, daß** es Mittel (521A, 521 B) umfaßt, um die Verbindung zwischen dem ersten und dem dritten Kanal (511A, 511 C) zu öffnen, wenn sich die Verbindung zwischen dem ersten und dem vierten Kanal (511A, 511D) ausgehend von der Anti-Schlupf-Position schließt, und um die Verbindung zwischen dem ersten und dem zweiten Kanal (511A, 511B) zu öffnen, wenn sich die Verbindung zwischen dem ersten und dem dritten Kanal (511A, 511 C) ausgehend von der Anti-Blockier-Position schließt.

4. Ventil nach irgendeinem der Ansprüche 1 bis 3, **dadurch gekennzeichnet, daß** es eine Zwischensituation zur Schlupfverhinderung gibt, in der dann, wenn das bewegliche Organ (520) in die erste Richtung (F1) bewegt wird, sich die Verbindung zwischen dem ersten und dem vierten Kanal (511A, 511D) öffnet, während dann, wenn das bewegliche Organ in die entgegengesetzte Richtung (F2) bewegt wird, sich die Verbindung zwischen dem ersten und dem dritten Kanal (511A, 511 C) öffnet, und daß es eine Zwischensituation zur Blockierverhinderung gibt, in der dann, wenn das bewegliche Organ (520) in die erste Richtung (F1) bewegt wird, sich die Verbindung zwischen dem ersten und dem dritten Kanal (511A, 511 C) öffnet, während dann, wenn das bewegliche Organ in die entgegengesetzte Richtung (F2) bewegt wird, sich die Verbindung zwischen dem ersten und dem zweiten Kanal (511 A, 511 B) öffnet.

5. Ventil nach irgendeinem der Ansprüche 1 bis 4, **dadurch gekennzeichnet, daß** das bewegliche Organ (520) in einer Bohrung (522) verschiebebeweglich ist, die in der ersten Bewegungsrichtung (F1) hintereinander angeordnet eine Bremsöffnung (522B), die mit dem zweiten Kanal (511B) verbunden ist, eine erste Öffnung zum Verbinden mit dem Bremszylinder (522A), die mit dem ersten Kanal (511A) verbunden ist, eine Anti-Schlupf-Öffnung (522D), die mit dem vierten Kanal (511D) verbunden ist, eine Entlastungsöffnung (522C), die mit dem dritten Kanal (511 C) verbunden ist, sowie eine zweite Öffnung zum Verbinden mit dem Bremszylinder (522A') aufweist, welche mit dem ersten Kanal (511 A) verbunden ist, und daß das bewegliche Organ (520) eine erste Nut (521 A), welche geeignet ist, die erste Öffnung zum Verbinden mit dem Bremszylinder (522A) entsprechend der Position des beweglichen Organs (520) mit der Bremsöffnung (522B) oder der Anti-Schlupf-Öffnung (522D) zu verbinden, sowie eine zweite Nut (521 B) aufweist, welche geeignet ist, entsprechend der Position des beweglichen Organs die Entlastungsöffnung (522C) mit der zweiten Öffnung zum Verbinden mit dem Bremszylinder (522A') zu verbinden oder diese zwei Öffnungen voneinander zu isolieren.

6. Ventil nach Anspruch 5, **dadurch gekennzeichnet, daß** die zweite Nut (521 B) geeignet ist, in der Anti-Schlupf- und der Anti-Blockier-Position die Rückstellsteuerkammer (534) mit der zweiten Öffnung zum Verbinden mit dem Bremszylinder (522A') zu verbinden.

7. Ventil nach Anspruch 6, **dadurch gekennzeichnet, daß** das bewegliche Organ (520) eine Querbohrung (526) aufweist, welche mit der zweiten Nut (521 B) in Verbindung steht und welche die bewegliche Wand (534A) der Rückstellsteuerkammer begrenzt.

8. Ventil nach Anspruch 7, **dadurch gekennzeichnet, daß** auf der der beweglichen Wand (534A) gegenüberliegenden Seite die Rückstellsteuerkammer (534) durch das Ende (536A) einer Nadel (536) begrenzt ist, welche in einer mit der Querbohrung (526) verbundenen Längsbohrung (527) des beweglichen Organs (520) verbunden ist.
